# DEMANDE DE BREVET EUROPEEN

(11) **EP 2 703 358 A1**
(43) Date de publication de la demande: **05.03.2014**
(21) Numéro de dépôt: 13182137.3
(22) Date de dépôt: 29.08.2013
(51) Int. Cl.: C02F 1/44, B64D 11/02

(54) **Dispositif de recyclage des eaux grises dans un véhicule de transport**

(30) Priorité: 31.08.2012 FR 1258168
(71) Demandeur: Veolia Water Solutions & Technologies Support, 94417 Saint-Maurice Cedex (FR)
(72) Inventeur: HERMON, Sylvain, 95880 ENGHIEN (FR); VIGNAL, Pierre, 40660 MOLIETS ET MAA (FR)
(74) Mandataire: Larcher, Dominique

(57) **Abrégé**

L'invention concerne un dispositif de recyclage (C) des eaux grises, en particulier pour un véhicule de transport équipé d'un réservoir (D) d'eau claire embarquée, ledit dispositif (C) étant destiné à fournir de l'eau recyclée pour la vidange d'au moins une toilette montée dans ledit véhicule, ledit dispositif comprenant une cuve (2) collectrice d'eaux grises, une pompe (4) destinée à faire circuler au moins une partie des eaux grises stockées dans la cuve (2) vers des moyens de filtrage (8) et un réservoir (12) de stockage d'eau grise filtrée utilisable pour le lavage des toilettes, ladite eau grise filtrée est stockée sous pression dans ledit réservoir (12).

Selon l'invention, lesdits moyens de filtrage (8) comprennent un ultrafiltre.

## Description

### 1. Domaine de l'invention

Le domaine de l'invention est celui du traitement de l'eau dans un véhicule de transport, notamment, mais non exclusivement, dans un aéronef.

Plus précisément, l'invention concerne une technique de recyclage des eaux grises dans un tel véhicule de transport.

### 2. Etat de la technique

Le transport aérien est particulièrement demandeur de solutions permettant de limiter la consommation de carburant nécessaire au vol des aéronefs, de façon à réduire les coûts.

Les contraintes de poids pour les équipements des aéronefs, et en particulier les équipements nécessitant l'utilisation d'eau embarquée, sont par conséquent importantes.

A bord des aéronefs, l'eau potable est stockée dans un ou plusieurs réservoirs et est généralement destinée à alimenter par pression les chasses d'eau des toilettes, les lavabos et les cuisines (« galleys » en anglais).

Dans certains aéronefs, les eaux grises provenant des lavabos et des cuisines sont évacuées à l'extérieur par un ou plusieurs mâts de drainage (on entend par « eaux grises » des eaux peu chargées en matières polluantes résultant du lavage de la vaisselle, des mains ou des douches notamment).

Dans la mesure où le volume d'eau embarquée dans les aéronefs est limité, des solutions pour recycler les eaux grises ont été proposées.

Ainsi, il est connu de recycler les eaux grises des lave-mains pour rincer les toilettes.

Toutefois, ces dispositifs antérieurs présentent un certain nombre d'inconvénients en ce qu'ils sont des dispositifs complexes mettant en oeuvre de nombreuses pompes, soupapes, filtres et conduits d'eau notamment qui nécessitent beaucoup de place et un entretien poussé, et qui sont relativement lourds.

Par ailleurs, il est bien connu que l'espace pour le passage des tuyaux des circuits d'eau dans un aéronef est extrêmement limité. Les circuits d'eau passent généralement sous les planchers de la cabine de l'aéronef et génèrent, en cas de fuite ou panne, des déposes longues et coûteuses, entraînant une immobilisation de l'aéronef.

### 3. Objectifs de l'invention

L'invention a notamment pour objectif de pallier ces inconvénients de l'art antérieur.

Plus précisément, un objectif de l'invention est de fournir un dispositif de recyclage des eaux grises dans un véhicule de transport, et notamment un aéronef (commercial par exemple), destiné à alimenter en eau la chasse d'eau d'une toilette et répondant aux contraintes imposées par le domaine du transport aérien, à savoir:
- le poids du dispositif doit être minimal car tout surpoids induit une surconsommation d'énergie de l'aéronef et son encombrement doit être réduit,
- la maintenance doit être minimale et s'intégrer aux plans de maintenance de l'aéronef,
- le système d'eau doit être drainable (vidangeable) sans électricité, une fois que l'aéronef est à l'arrêt (c'est-à-dire une fois que l'alimentation électrique de l'aéronef est coupée),
- le rinçage (« flushing » en anglais) des toilettes doit être optimal (absence d'odeurs, de résidus, de couleurs) que ce soit avec l'eau recyclée ou avec l'eau potable embarquée, et
- la quantité d'eau à embarquer doit être minimale.

Un autre objectif de l'invention est de fournir un tel dispositif de recyclage qui empêche toute contamination du réseau d'eau embarqué et qui puisse être contourné, en cas de dysfonctionnement par exemple, sans nuire au fonctionnement de la toilette (en d'autres termes, l'alimentation en eau de rinçage de la toilette doit être possible même lorsque le dispositif de recyclage est désactivé).

### 4. Exposé de l'invention

Ces objectifs, ainsi que d'autres qui apparaîtront plus clairement par la suite, sont atteints à l'aide d'un dispositif de recyclage des eaux grises, en particulier pour un véhicule de transport équipé d'un réservoir d'eau claire embarquée, ledit dispositif étant destiné à fournir de l'eau recyclée pour la vidange d'au moins une toilette montée dans ledit véhicule, ledit dispositif comprenant une cuve collectrice d'eaux grises, une pompe destinée à faire circuler au moins une partie des eaux grises stockées dans la cuve vers des moyens de filtrage et un réservoir de stockage d'eau grise filtrée utilisable pour le lavage des toilettes, ladite eau grise filtrée étant stockée sous pression dans ledit réservoir.

Selon l'invention, lesdits moyens de filtrage comprennent un ultrafiltre.

Ainsi, l'invention repose sur une approche tout à fait originale de recyclage des eaux grises dans un véhicule de transport, et notamment dans un aéronef, qui utilise l'eau s'écoulant d'un lavabo (lave-main) ou d'une douche de l'aéronef comme eau de chasse des toilettes.

L'eau récupérée, dite eau grise, est filtrée par un ultrafiltre et stockée sous pression, et non pas à pression atmosphérique, dans un ballon.

La mise en oeuvre d'un tel filtre permet de produire une eau filtrée dont la qualité (en particulier absence de matières en suspension) est acceptable pour une utilisation en chasse d'eau de toilettes.

L'ultrafiltre permet notamment d'éliminer les matières organiques, la bactériologie et les couleurs des eaux grises destinées, une fois filtrées, au rinçage de la cuvette des toilettes.

Selon une caractéristique avantageuse de l'invention, ladite eau grise filtrée est stockée dans ledit réservoir à une pression comprise entre 2 et 4 bars.

L'eau grise filtrée par l'ultrafiltre est stockée sous pression dans un ballon, à une pression de 3.5 bars par exemple, et non pas à pression atmosphérique.

Cette technique est avantageuse en ce sens que la mise sous pression de l'eau de rinçage en amont de la cuvette des toilettes ne nécessite pas de mettre en oeuvre une pompe pour aspirer l'eau filtrée et la diriger vers la cuvette des toilettes. Une telle pompe serait toutefois nécessaire si l'eau grise filtrée était stockée dans le ballon à pression atmosphérique.

Ainsi, le dispositif de l'invention est économique, léger et peu encombrant.

En outre, la maintenance d'un tel dispositif est réduite et relativement aisée.

L'invention apporte une solution de structure et de fonctionnement simple, silencieuse, qui minimise le volume de stockage de l'eau potable et de l'eau usée (et donc réduit le poids transporté au cours du vol de l'avion) et répond aux exigences de sécurité du domaine du transport aérien notamment.

On note par ailleurs qu'il est contraire à la pratique de l'homme de l'art de prévoir une pression en aval d'un ultrafiltre. En effet, généralement, la pression en aval d'un ultrafiltre est minimisée afin de maximiser la pression transmembranaire d'une part, et éviter les à-coups de fonctionnement (dus à une pression importante en amont et une pression importante en aval) d'autre part.

En outre, dans le cas d'un rétro-lavage d'un ultrafiltre, il est particulièrement déconseillé d'imposer une pression en aval du filtre.

Le fait de mettre en oeuvre dans le dispositif de l'invention une pression comprise entre 2 et 4 bars en aval de l'ultrafiltre constitue ainsi une solution qui va à l'encontre des préjugés.

De façon avantageuse, le dispositif de recyclage comprend une vanne pour connecter sélectivement ladite toilette au réservoir de stockage d'eau grise filtrée ou audit réservoir d'eau claire embarquée.

Un tel dispositif peut être désactivé et contourné en cas de problème. Ainsi, la toilette reste fonctionnelle même en cas de dysfonctionnement du dispositif de recyclage, l'eau de rinçage de la cuvette étant fournie par le réseau d'eau potable embarquée (un fonctionnement sans recyclage des eaux grises du réseau d'eau dans l'avion est donc possible).

Préférentiellement, le dispositif de recyclage comprend un clapet anti-retour entre ledit réservoir d'eau claire embarquée et ladite vanne.

Le dispositif de l'invention est muni d'une sécurité d'anti-retour vers le réseau d'eau potable du véhicule et est, par conséquent, indépendant du réseau d'eau potable embarquée du véhicule.

Ainsi, le retour des eaux grises et/ou des eaux recyclées vers la cuve d'eau potable est rendu impossible.

En d'autres termes, un tel clapet vise à empêcher la circulation de l'eau grise filtrée vers le réservoir d'eau claire embarquée.

Avantageusement, le dispositif de recyclage comprend une vanne de contre-pression entre ladite vanne et la cuve collectrice d'eaux grises.

Une telle vanne de contre-pression vise à maintenir une pression stable dans le réservoir d'eau filtrée et donc à améliorer la précision du dosage d'eau grise filtrée utilisable pour le lavage des toilettes et, également, à sécuriser le circuit de l'eau grise filtrée en évitant toute surpression dans le circuit.

De manière avantageuse, ledit dispositif de recyclage comprend des capteurs de pression disposés respectivement en amont et en aval des moyens de filtrage de façon à déterminer la différence de pression entre l'entrée et la sortie des moyens de filtrage.

Cette différence de pression permet d'indiquer un colmatage éventuel, même partiel, du filtre des eaux grises, ce qui pourrait nuire à la qualité de l'eau de rinçage des toilettes.

Elle permet donc d'indiquer qu'une opération de maintenance du filtre (nettoyage ou remplacement) est nécessaire.

De façon préférentielle, ledit dispositif de recyclage comprend un capteur de niveau de remplissage de la cuve collectrice d'eaux grises

Le signal de sortie d'un tel capteur peut être utilisé pour déterminer la quantité d'eau disponible pour rincer les toilettes et anticiper un éventuel manque d'eau recyclée, ce qui nécessiterait de contourner le circuit de recyclage pour rincer les toilettes à partir de l'eau claire embarquée.

Avantageusement, ledit dispositif de recyclage est relié à des moyens électroniques de contrôle et de commande.

Ces moyens électroniques de contrôle et de commande du dispositif de l'invention prennent la forme d'un microcontrôleur par exemple qui reçoit les données mesurées par les différents capteurs du dispositif et délivre des signaux de commande du dispositif.

Préférentiellement, lesdits moyens électroniques de contrôle et de commande comprennent des moyens commandant la mise en marche ou l'arrêt dudit dispositif de recyclage.

Selon une caractéristique avantageuse de l'invention, lesdits moyens électroniques de contrôle et de commande comprennent des moyens commandant le rinçage à contrecourant des moyens de filtrage avec l'eau grise filtrée stockée dans ledit réservoir.

Le rétro-lavage des moyens de filtrage par de l'eau grise filtrée stockée dans le réservoir est avantageux en ce sens qu'il ne nécessite pas de produits chimiques.

Selon une caractéristique avantageuse de l'invention, lesdits moyens électroniques de contrôle et de commande tiennent compte pour commander le rinçage à contrecourant des moyens de filtrage de l'au moins un des critères suivants :
- une durée de fonctionnement prédéterminée des moyens de filtrage;
- une perte de charge prédéterminée au travers des moyens de filtrage;
- un volume d'eau filtrée par les moyens de filtrage;
- un signal d'horloge ;
- des signaux de sortie des capteurs de pression;
- un signal de débit d'eau.Le rinçage à contre-courant peut être commandé sur horloge (c'est-à-dire à intervalles de temps prédéterminés) ou bien lorsqu'un colmatage du filtre des eaux grises est détecté sur la base des signaux de sortie des capteurs de pression situés en amont et en aval du filtre (et/ou sur la base de signaux de débit).

Il peut être, en outre, être déclenché en fonction d'une durée de fonctionnement du filtre et/ou d'une perte de charge prédéterminée et/ou d'un volume d'eau filtrée par le filtre.

Avantageusement, lesdits moyens électroniques de contrôle et de commande comprennent des moyens commandant la vidange dudit dispositif de recyclage et mettant en oeuvre ladite pompe.

Ainsi, le dispositif de l'invention est entièrement et automatiquement drainable. Une telle opération de maintenance est relativement aisée.

Selon une caractéristique avantageuse de l'invention, lesdits moyens électroniques de contrôle et de commande comprennent des moyens commandant le drainage des matières en suspension des eaux grises retenues par les moyens de filtrage.

Un tel drainage des matières en suspension peut être mis en oeuvre lorsque un rinçage à contre-courant du filtre des eaux grises est en cours ou bien terminé.

Avantageusement, ledit dispositif de recyclage comprend des moyens de fixation réversibles à un module de toilette comprenant un lavabo et une toilette.

De façon préférentielle, il comprend des moyens de liaison de la cuve collectrice d'eaux grises à un lavabo ou à une douche monté(e) dans ledit véhicule.

Le dispositif de l'invention est décentralisé et est installé pour chaque module de toilettes d'un aéronef par exemple, dans l'espace passager. Il est avantageux en ce sens qu'il ne prend aucun volume dans les soutes de l'aéronef.

Il est compact (c'est-à-dire qu'il présente un faible encombrement, ce qui est d'une grande importance dans les aéronefs en particulier) et son montage/démontage est aisé.

Les toilettes équipées d'un tel dispositif offrent un bon compromis entre confort pour les passagers et coûts d'opération pour les compagnies aériennes.

### 5. Liste des figures

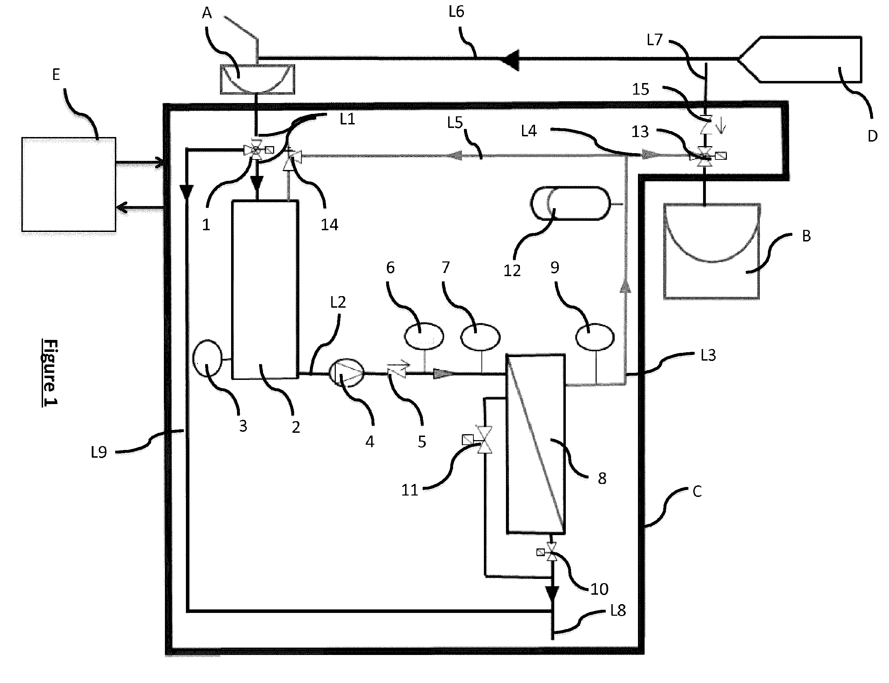

D'autres caractéristiques et avantages de l'invention apparaîtront plus clairement à la lecture de la description suivante d'un mode de réalisation particulier de l'invention, donné à titre de simple exemple illustratif et non limitatif, et de la figure 1 annexée, qui est une représentation schématique du dispositif de recyclage des eaux grises de l'invention selon un mode de réalisation.

### 6. Description détaillée d'un mode de réalisation de l'invention

A titre d'exemple, on décrit par la suite le fonctionnement du dispositif de recyclage des eaux grises de l'invention lorsqu'il est mis en oeuvre dans un avion (commercial par exemple).

On comprend toutefois que ce dispositif peut être mis en oeuvre dans d'autres véhicules, comme par exemple un camping-car, un train, un navire ou un autobus.

Dans l'exemple illustré de façon schématique sur la figure 1, chaque module de toilettes de l'avion comprend un lavabo, ou lave-main, A, dont le robinet est relié par un conduit L6 à un réservoir D d'eau potable embarqué, et une cuvette de toilette B qui est reliée à un bac de stockage des eaux usées (non représenté).

Chaque monument comprend en outre un dispositif ou unité de recyclage C destinée à filtrer les eaux grises s'écoulant du lavabo A et à alimenter avec cette eau filtrée la chasse d'eau des toilettes B.

Contrairement aux solutions de l'art antérieur qui mettent en oeuvre un dispositif de recyclage centralisé, c'est-à-dire une seule unité de recyclage pour tout l'avion, l'unité de recyclage C est ici décentralisée. En d'autres termes, chaque module de toilettes d'un avion est équipé d'une unité de recyclage dédiée.

L'utilisation d'une telle unité de recyclage C décentralisée permet de minimiser le nombre de tuyaux, et donc le poids, qui sont nécessairement mis en oeuvre dans un dispositif centralisé pour relier ce dernier aux différents monuments de l'avion. Cet aspect est important dans la mesure où, comme souligné précédemment, l'espace pour le passage des tuyaux dans un avion est extrêmement contraint.

L'unité de recyclage C mise en oeuvre dans chaque module de toilettes de l'avion est ainsi placée entre le lavabo A et la cuvette de toilette B. Elle comprend une cuve 2 de réception d'eaux grises, une pompe 4 destinée à faire circuler les eaux grises de la cuve 2 vers un module d'ultrafiltration 8 des eaux grises, et un vase d'expansion 12 de mise en pression des eaux grises filtrées par le module d'ultrafiltration 8.

Ces différents éléments 2, 4, 8, 12, A, B, C sont reliés entre par des tuyaux ou conduits représentés schématiquement sur la figure 1 par des lignes.

La cuve, ou réservoir, 2 est d'une capacité d'environ quatre litres dans cet exemple, et permet de stocker les eaux grises s'écoulant du lavabo B par le conduit L1.

Le lavabo A est alimenté en eau claire à partir du réservoir D d'eau embarquée par le biais du conduit L6. La cuve 2 est munie d'un capteur 3 de niveau de remplissage, dont le signal de sortie est envoyé vers un microcontrôleur d'un dispositif de contrôle et de commande, ou unité centrale de traitement, E, permettant ainsi d'avoir une indication du niveau de remplissage de la cuve 2.

On note qu'il est prévu une vanne trois voies 1, placée entre le lavabo A et la cuve 2, destinée à faire circuler les eaux grises provenant du lavabo A soit vers la cuve 2, soit vers un dispositif d'évacuation ou mât de drainage lorsque la cuve 2 est pleine ou lorsque l'unité de recyclage C est désactivée. La vanne 1 est, comme les autres vannes de l'unité de recyclage C, une électrovanne dans cet exemple.

La pompe 4 qui est, dans cet exemple, une pompe auto-amorçante munie d'un pressostat est destinée à faire circuler au moins une partie des eaux grises qui sont stockées dans la cuve 2 vers le module d'ultrafiltration 8 via le conduit L2.

Entre la pompe 4 et le module d'ultrafiltration 8 sont prévus respectivement un clapet anti-retour 5 et un débitmètre 6 permettant de mesurer le débit de l'eau circulant dans le conduit L2 (et donc le débit de la pompe 4).

De façon classique, le module d'ultrafiltration 8 comprend une enceinte de filtration (non représentée) comportant une membrane semi-perméable qui sépare le volume interne de l'enceinte d'ultrafiltration en deux compartiments : le compartiment qui reçoit les eaux grises à filtrer et le compartiment qui reçoit les eaux filtrées.

Le filtre ou membrane de filtrage (non représenté sur la figure 1) mis en oeuvre dans le module d'ultrafiltration 8 permet un abattement optimisé des matières en suspension des eaux grises provenant de la cuve 2, ainsi qu'un abattement partiel mais suffisant de la couleur et des matières organiques de ces eaux grises (et par conséquent un abattement des nuisances olfactives).

Le liquide filtré par le module d'ultrafiltration 8 et sortant de ce dernier par le conduit L3 est ici appelé filtrat et les matières bloquées par le module d'ultrafiltration 8 sont appelées concentrats.

Le module d'ultrafiltration 8 permet la filtration de 120 litres par heure d'eaux grises à une pression de 1.3 bars soit 19 psi (pour « pound per square inch » en anglais, ou « livre par pouce carré » en français). Il est relié à une première vanne 10 deux voies de vidange du module d'ultrafiltration 8, une telle vidange étant mise en oeuvre lorsque l'avion est à l'arrêt par exemple. La vanne 10 est reliée à un conduit L8 lui-même relié au mât de drainage.

Le module d'ultrafiltration 8 est en outre relié à une deuxième vanne 11 deux voies de rejet des concentrats résultant de l'ultrafiltration vers le mât de drainage. La vanne 11 est reliée à un conduit L8 lui-même relié au mât de drainage.

Par ailleurs, le module d'ultrafiltration 8 est relié à deux capteurs de pression 7 et 9 situés respectivement en amont et en aval du module d'ultrafiltration 8 sur les conduits L2 et L3 respectivement. Les capteurs 7 et 9, qui sont des capteurs électroniques de type connu, permettent de déterminer la différence de pression entre l'entrée et la sortie du module d'ultrafiltration 8 et ainsi détecter un éventuel colmatage du filtre du module d'ultrafiltration 8.

Dans le cas où le module d'ultrafiltration 8 est colmaté (dans ce cas de figure, la pression transmembranaire mesurée par les deux capteurs de pression 7 et 9 est supérieure à 1 bar par exemple), une alarme (non représentée) se déclenche. Dans ce cas, la toilette retourne à un fonctionnement sans recyclage est reste fonctionnelle.

Il est à noter que la mise en oeuvre de capteurs de pression 7 et 9 permet non seulement de suivre l'évolution des pressions transmembranaires du module d'ultrafiltration 8, et d'anticiper les colmatages du filtre, mais permet en outre d'affiner le volume d'eau à embarquer avant chaque décollage de l'avion. Ceci permet par conséquent d'optimiser le poids embarqué dans l'avion.

Par ailleurs, l'unité de recyclage C met en oeuvre un vase d'expansion 12 comprenant des moyens de mise sous pression (dans cet exemple, à une pression de 45 psi soit 3.1 bars) d'un volume prédéterminé d'eau filtrée (ou filtrat) par le module d'ultrafiltration 8.

Plus généralement, l'eau grise filtrée est stockée dans le vase d'expansion 12 à une pression comprise entre 2 et 4 bars, par exemple à une pression comprise entre 2, 5 et 4 bars, ou entre 3 et 4 bars selon un autre exemple.

L'eau filtrée stockée dans le vase d'expansion 12 est destinée à rincer la cuvette des toilettes B via le conduit L4. Le volume d'eau stockée sous pression dans le vase d'expansion 12 est par exemple de 600 millilitres, ce qui est équivalent à environ trois chasses d'eau de toilette.

Le vase d'expansion 12 constitue ainsi un réservoir d'eau de chasse dimensionné de façon à pouvoir stocker plusieurs volumes d'eau de chasses d'eau qui peuvent être fournies aux toilettes successivement sans que la pompe 4 soit amorcée.

Le nettoyage de la cuvette est par exemple déclenché par l'utilisateur en manoeuvrant une poignée ou un bouton. L'eau de rinçage est délivrée dans la cuvette par tout type de dispositif connu de l'homme du métier.

Le stockage sous pression du filtrat dans le vase d'expansion 12 permet d'éviter la mise en oeuvre d'une cuve de stockage du filtrat à pression atmosphérique et d'une pompe d'envoi du filtrat ainsi stocké vers les toilettes.

La solution de l'invention permet ainsi de limiter le nombre d'éléments nécessaires au recyclage des eaux grises et, par conséquent, le poids et le coût du dispositif de recyclage C. Elle permet par ailleurs de réduire les opérations de maintenance.

Le vase d'expansion 12 alimente en filtrat la toilette B par le biais d'une vanne 13 trois voies qui connecte sélectivement la toilette B au vase d'expansion 12 ou réservoir d'eau embarquée D. En d'autres termes, cette vanne 13 est apte à alimenter la toilette B en eau propre stockée dans le réservoir d'eau embarquée D via le conduit L7, lorsque le dispositif de recyclage C dysfonctionne par exemple.

En outre, l'unité de recyclage C met en oeuvre un clapet anti-retour 15 entre le réservoir d'eau embarquée D et le vase d'expansion 12 qui vise à empêcher le retour de l'eau filtrée par le module d'ultrafiltration 8 vers le réservoir d'eau embarquée D via le conduit L7, et par conséquent la contamination de l'eau potable embarquée dans l'avion.

Par ailleurs, l'unité de recyclage C met en oeuvre une vanne 14 de contre pression placée sur le conduit L5 entre le vase d'expansion 12 et la cuve 2 de stockage des eaux grises. Cette vanne 14 permet de régulariser le débit de la vanne 13, c'est-à-dire qu'elle vise à améliorer la précision du dosage d'eau grise filtrée utilisable pour le lavage des toilettes et à sécuriser le circuit de filtrat en évitant toute surpression dans le circuit de l'unité de recyclage C.

La vanne 14 est tarée et réglée à une valeur de 50 psi dans cet exemple.

En outre, l'unité de recyclage C est reliée à un dispositif de contrôle et de commande E, ou unité de supervision globale, qui prend la forme d'un contrôleur électronique apte à exécuter une application logicielle, ou programme d'ordinateur, de traitement des signaux de mesure et de commande de l'unité de recyclage C en fonction des signaux de mesure. Un tel contrôleur électronique E reçoit ainsi les données mesurées par le capteur de niveau 3, le débitmètre 6, et les capteurs de pression 7 et 9 notamment, et est apte à déclencher l'alarme de pression haute transmembranaire mentionnée précédemment. Ce contrôleur électronique E est en outre apte à délivrer des signaux de commande vers les vannes 1, 10, 11, 13 et 14.

Toutes les informations de fonctionnement de l'unité de recyclage C et notamment le débit d'eau à traiter, le niveau du réservoir 2, la pression dans les conduits, ou la différence de pression peuvent être stockées dans une mémoire de stockage électronique du contrôleur électronique E (et/ou dans des puces par exemple dont la mémoire est lue lorsque l'avion est au sol) par exemple. Ces informations sont disponibles en temps réel afin de permettre une maintenance plus aisée lorsque l'avion a atterri et est au sol.

En d'autres termes, les signaux d'horloge, d'alarme et de commande de l'unité de recyclage C sont gérés par le contrôleur électronique E qui permet en outre de superviser l'état du système.

On décrit par la suite les différents modes de fonctionnement du dispositif de recyclage C de l'invention qui sont commandés par ce contrôleur électronique E.

### Mode production

Dans ce mode de fonctionnement, l'unité de recyclage C est active. Les eaux usées du lavabo A s'écoulent gravitairement dans la cuve de réception 2. La pompe 4 envoie ensuite sous pression l'eau usée de la cuve 2 vers le module d'ultrafiltration 8.

Le filtrat est ensuite stocké dans le vase d'expansion 12 jusqu'à la prochaine chasse d'eau, alors que le concentrat, retenu par le module d'ultrafiltration 8, est évacué par le biais de la vanne 11 de rejet vers le mât de drainage par le conduit L8.

Lors d'une chasse d'eau, une partie du filtrat (environ 200 millilitres) stocké dans le vase d'expansion 12 est envoyée, par pression contenue dans le vase d'expansion 12, vers la toilette B par le biais de la vanne 13 de façon à rincer la cuvette.

La vanne 14 de contre-pression joue alors son rôle de régulation du débit de l'eau envoyée dans la toilette B et de maintien de la pression dans le circuit de l'unité de recyclage C.

Le vase d'expansion 12 est connecté au circuit de perméat sous pression et se remplit lorsque la pression monte dans ce circuit. Une fois la pression arrivée à la valeur de la contre-pression tarée de la vanne 14 de contre-pression, celle-ci s'ouvre pour évacuer de l'eau filtrée vers le réservoir 2 collecteur d'eaux grises. La pression du circuit de perméat retombe alors et la vanne 14 de contre-pression se ferme, et ainsi de suite.

Lorsqu'un appel de chasse d'eau est déclenché au toilette B, la vanne 13 s'ouvre et l'eau recyclée est envoyée vers le toilette B.

Il est à noter que la pression du circuit de perméat chuterait très vite s'il n'y avait pas de vase d'expansion 12. Le vase d'expansion 12 permet en effet de maintenir la pression d'un réseau (en l'occurrence celui du perméat) même si celui-ci perd de l'eau (dans une certaine limite naturellement).

Le vase d'expansion 12 est constitué ici d'une poche souple (en caoutchouc) dans laquelle rentre l'eau. Cette poche souple est environnée d'un gaz (de l'azote par exemple) à une pression déterminée. Lorsque la poche se vide, le gaz maintient le liquide résiduel à la pression initiale.

Dans ce mode, l'eau usée stockée dans la cuve 2 est ainsi traitée en « batch » et le concentrat retenu par le module d'ultrafiltration 8 est régulièrement envoyé au drain, soit sur horloge, soit sur signal de pression transmembranaire élevé.

### Mode de vidange

Lorsque l'avion est au sol, il est possible de vidanger l'intégralité de l'unité de recyclage C (réservoirs et circuits) ainsi que le mât de drainage (il s'agit du mode de vidange).

Le vidangeage de l'unité de recyclage C est déclenché sur un signal d'atterrissage ou d'ouverture des portes de l'avion fourni par le système électrique de l'avion au contrôleur électronique E de l'unité de recyclage C.

Tant que l'alimentation électrique de l'avion est maintenue, la vidange de l'unité C est activée. Dans ce cas, la pompe 4 est activée (en fonctionnement) et le mât de drainage est ouvert.

L'accès au réservoir 2 est empêché par la vanne 1, c'est-à-dire que les eaux usées s'écoulant du lavabo A sont dirigées directement vers le mât de drainage via le conduit L9.

Lorsque le capteur 3 de niveau de la cuve 2 détecte que la cuve 2 est vide, la pompe 4 s'arrête et la vanne de vidange 10 reste ouverte.

La vanne de vidange 10 est ouverte par défaut, ce qui veut dire que l'unité de recyclage C peut finir de se drainer, même lorsque l'alimentation électrique de l'avion est coupée (mise au parking).

### Mode de lavage à contre-courant

Le lavage à contre-courant (« backwash » en anglais) consiste à rétrolaver un filtre afin d'enlever les particules qui s'y sont accumulées et d'empêcher que le filtre ne se bouche. Dans le cadre de l'invention, le lavage à contre-courant est appliqué au filtre du module d'ultrafiltration 8 et permet d'éviter un lavage chimique de ce filtre.

Le lavage à contre-courant peut par exemple être déclenché sur alarme haute de pression transmembranaire du filtre mesurée par les capteurs de pression 7 et 9, et/ou sur horloge.Pour effectuer ce lavage à contre-courant, la pompe 4 est stoppée et la vanne 11 de rejet des concentrats au drain est ouverte.

Le lavage à contre-courant s'effectue par envoi d'eaux filtrées (stockées dans le vase d'expansion 12) à contre courant dans le module d'ultrafiltration 8 avant d'être drainées par l'intermédiaire de la vanne 10 de vidange qui est ouverte.

Les concentrats sont donc vidangés vers le mât de drainage par le conduit L8. Il est ensuite possible de repasser en mode production décrit précédemment.

Ces séquences sont gérées par le contrôleur électronique E sur horloge.

On comprend donc que l'unité de recyclage C peut être utilisée dans le mode de lavage à contre-courant pour tenter de rétablir une pression convenable du module d'ultrafiltration 8. Si cette opération s'avère infructueuse, il est nécessaire d'attendre que l'avion atterrisse et qu'une opération de maintenance soit effectuée par un opérateur.

### Mode de contournement (ou « by-pass » en anglais)

En cas de colmatage de la membrane du filtre mis en oeuvre dans le module d'ultrafiltration 8 (c'est-à-dire lorsque la pression transmembranaire ne parvient pas à se stabiliser à un niveau convenable), on peut désactiver et contourner l'unité de recyclage C pour revenir à un fonctionnement classique de la toilette B dont la chasse d'eau est alors alimentée en eau par le réservoir d'eau embarqué D via le conduit L7.

Dans ce cas, les eaux usées du lavabo A s'écoulent directement vers le mât de drainage via le conduit L9 et le rinçage de la cuvette de la toilette B est alors effectué par le réseau d'eau potable embarqué (la toilette B reste ainsi fonctionnelle).

Il est possible durant ce mode de fonctionnement de purger l'unité de recyclage C par un lavage à contre-courant comme décrit précédemment.

### Autres aspects et variantes

Contrairement aux dispositifs connus de l'art antérieur, l'unité de recyclage C est relativement légère, son poids ne dépassant pas 6 kg, supportage compris. Elle est de préférence fabriquée en plastique.

En particulier, du fait des faibles pressions mises en oeuvre, le carter du module d'ultrafiltration est fin et léger

Par ailleurs, l'unité de recyclage C est placée sous le lavabo A du module de toilettes et est, par conséquent, aisément accessible.

L'unité de recyclage C est fixée de manière réversible au module de toilettes par des vis papillon ou équivalent, permettant ainsi un démontage aisé et rapide à la main.

Par ailleurs, les connectiques hydrauliques sont montables et démontables à la main.

On note que pour un souci d'encombrement, la forme générale de l'unité de recyclage C est dédiée au module de toilettes. Ainsi, les éléments sont spécifiquement moulés pour s'adapter aux contraintes géométriques du module de toilettes.

Par ailleurs, la maintenance du système de recyclage C est facilitée. En cas de colmatage, le module d'ultrafiltration 8 est facilement remplaçable. Alternativement, l'unité de recyclage C peut aisément être remplacée, sans outil, dans un temps approximativement égal à 15 minutes. Ces interventions sont effectuées lors des phases de maintenance, lorsque l'avion est au sol.

Dans les deux cas, aucun outil n'est nécessaire. En effet, les éléments sont encliquetés sur l'unité C de recyclage.

En outre, en cas de présence éventuelle de signes de couleur de l'eau, il est possible, si nécessaire, d'ajouter dans l'unité C de recyclage une cartouche filtrante de charbon actif.

Ainsi, le dispositif de l'invention vise à recycler par filtrage les eaux grises d'un véhicule de transport pour les utiliser comme fluide de nettoyage/rinçage d'une cuvette de toilette, ou même de plusieurs cuvettes.

La mise en oeuvre d'un tel dispositif permet de simplifier les opérations de maintenance, de réduire les coûts de fabrication et d'améliorer la sécurité en réduisant au minimum le nombre des éléments constituants.

Il est à noter que le dispositif est également adapté pour recycler les eaux grises d'une douche vers les toilettes d'un véhicule de transport.

Bien sûr, l'invention n'est pas limitée à l'exemple qui vient d'être décrit et de nombreux aménagements peuvent être apportés à cet exemple sans sortir du cadre de l'invention.

## Revendications

1. Dispositif de recyclage (C) des eaux grises, en particulier pour un véhicule de transport équipé d'un réservoir (D) d'eau claire embarquée, ledit dispositif (C) étant destiné à fournir de l'eau recyclée pour la vidange d'au moins une toilette montée dans ledit véhicule, ledit dispositif comprenant une cuve (2) collectrice d'eaux grises, une pompe (4) destinée à faire circuler au moins une partie des eaux grises stockées dans la cuve (2) vers des moyens de filtrage (8) et un réservoir (12) de stockage d'eau grise filtrée utilisable pour le lavage des toilettes, ladite eau grise filtrée étant stockée sous pression dans ledit réservoir (12), **caractérisé en ce que** lesdits moyens de filtrage (8) comprennent un ultrafiltre.

2. Dispositif de recyclage (C) selon la revendication 1, **caractérisé en ce que** ladite eau grise filtrée est stockée dans ledit réservoir (12) à une pression comprise entre 2 et 4 bars.

3. Dispositif de recyclage (C) selon la revendication 1 ou 2, **caractérisé en ce qu'il** comprend des moyens de fixation réversibles à un module de toilette comprenant un lavabo et une toilette.

4. Dispositif de recyclage (C) selon l'une des revendications 1 à 3, **caractérisé en ce qu'il** comprend une vanne (13) pour connecter sélectivement ladite toilette au réservoir (12) de stockage d'eau grise filtrée ou audit réservoir (D) d'eau claire embarquée.

5. Dispositif de recyclage (C) selon la revendication 4, **caractérisé en ce qu'il** comprend un clapet anti-retour entre ledit réservoir (D) d'eau claire embarquée et ladite vanne (13).

6. Dispositif de recyclage (C) selon la revendication 4 ou 5, **caractérisé en ce qu'il** comprend une vanne de contre-pression (14) entre ladite vanne (13) et ladite cuve (2) collectrice d'eaux grises.

7. Dispositif de recyclage (C) selon l'une des revendications 1 à 6, **caractérisé en ce que** ledit dispositif de recyclage (C) comprend des capteurs de pression (7, 9) disposés respectivement en amont et en aval des moyens de filtrage (8) de façon à déterminer la différence de pression entre l'entrée et la sortie des moyens de filtrage (8).

8. Dispositif de recyclage (C) selon l'une des revendications 1 à 7, **caractérisé en ce qu'il** comprend un capteur (3) de niveau de remplissage de la cuve (2) collectrice d'eaux grises.

9. Dispositif de recyclage (C) selon l'une des revendications 1 à 8, **caractérisé en ce qu'il** est relié à des moyens électroniques de contrôle et de commande (E).

10. Dispositif de recyclage (C) selon la revendication 9, **caractérisé en ce que** lesdits moyens électroniques de contrôle et de commande (E) comprennent des moyens commandant la mise en marche ou l'arrêt dudit dispositif de recyclage (C).

11. Dispositif de recyclage (C) selon la revendication 9 ou 10, **caractérisé en ce que** lesdits moyens électroniques de contrôle et de commande (E) comprennent des moyens commandant le rinçage à contrecourant des moyens de filtrage (8) avec l'eau grise filtrée stockée dans ledit réservoir (12).

12. Dispositif de recyclage (C) selon la revendication 11, **caractérisé en ce que** lesdits moyens électroniques de contrôle et de commande (E) tiennent compte pour commander le rinçage à contrecourant des moyens de filtrage (8) de l'au moins un des critères suivants :
- une durée de fonctionnement prédéterminée des moyens de filtrage (8);
- une perte de charge prédéterminée au travers des moyens de filtrage (8);
- un volume d'eau filtrée par les moyens de filtrage (8);
- un signal d'horloge ;
- des signaux de sortie des capteurs de pression (7,9);
- un signal de débit d'eau.

13. Dispositif de recyclage (C) selon l'une des revendications 10 à 12, **caractérisé en ce que** lesdits moyens électroniques de contrôle et de commande (E) comprennent des moyens commandant la vidange dudit dispositif de recyclage (C) et mettant en oeuvre ladite pompe (4).

14. Dispositif de recyclage (C) selon l'une des revendications 10 à 13, **caractérisé en ce que** lesdits moyens électroniques de contrôle et de commande (E) comprennent des moyens commandant le drainage des matières en suspension des eaux grises retenues par les moyens de filtrage (8).

15. Dispositif de recyclage (C) selon l'une des revendications 1 à 14, **caractérisé en ce qu'il** comprend des moyens de liaison de la cuve (2) collectrice d'eaux grises à un lavabo ou à une douche monté(e) dans ledit véhicule.
